# EUROPEAN PATENT APPLICATION

(11) **EP 4 686 675 A1**
(43) Date of publication of application: **04.02.2026**
(21) Application number: 25191626.8
(22) Date of filing: 24.07.2025
(51) Int. Cl.: B65G 47/84, B65C 9/06

(54) **SUPPORT PLATE DEVICE FOR SUPPORTING CONTAINER AND OPERATING MACHINE PROVIDED WITH SAID SUPPORT PLATE DEVICE**

(30) Priority: 31.07.2024 IT 202400017914
(71) Applicant: Ave Technologies S.r.l., 30038 Spinea (VE) (IT)
(72) Inventor: GRIONI, Matteo, 46040 Rodigo (MN) (IT); BISSOLI, Marco, 46048 Roverbella (MN) (IT); MERLO, Stefano, 46033 Castel d'Ario (MN) (IT); GANDINI, Francesco, 46044 Goito (MN) (IT)
(74) Representative: Caldon, Giuliano

(57) **Abstract**

Support plate device (1) adapted to be mechanically fixed to an operating machine (100) to support containers, which is provided with a support surface (11) adapted to receive the bottom of said containers and an iris-shaped diaphragm (2), which comprises a plurality of movable blades (3) provided with a sliding edge (31) and a centering edge (32) defining, together with the centering edges (32) of the other said movable blades (3), an internal centering surface (21) which delimits a central opening (22). The internal centering surface (21) defines, together with the support surface (11), a centering seat (23) within which the lower end of the container is susceptible of being placed. Each movable blade (3) is actuatable to be moved with its own sliding edge (31) slidably associated with the centering edge (32) of the contiguous movable blade (3) in order to adjust the dimensions of said central opening (22) in order to house, in the centering seat (23), containers with size different from each other.

## Description

### Field of application

The present invention relates to a support plate device for supporting containers and to an operating machine for a bottling plant provided with such a support plate device according to the preamble of the respective independent claims.

The support plate device in question is intended to be used in an operating machine of a bottling plant, for example a labeling machine, to receive the bottom of a container, for example a bottle, and to support it while it is being processed by the operating machine itself.

Therefore, the support plate device in question falls within the field of the production of operating machines for bottling plants or the production of accessories for such operating machines.

### State of the art

**In** the field of industrial bottling, machines are known for automatically performing a series of operations on containers. For example, filling machines are known on the market for filling containers with liquids such as food (for example wine, fruit juice, water, etc.), capping machines for applying caps to containers after they have been filled, and labeling machines for applying labels to containers.

As is known, the operating machines of bottling plants can be linear, particularly adapted to low production volumes, or they can be rotating carousel type machines, particularly adapted to high production volumes.

For example, in the case of rotating carousel machines, the operating machines comprise in a known manner a turret rotating around a vertical rotation axis, which fixedly carries a lower support disc provided with a plurality of plate devices arranged peripherally around the rotation axis and adapted to receive in abutment the bottom of a corresponding container to support it. Furthermore, the rotating turret also fixedly carries an upper support disc, which carries a plurality of operating heads mounted thereon, each of which is arranged vertically aligned with a corresponding plate device.

For example, in the case of a labeling machine, each operating head comprises a compression device adapted to act on the container head to hold it in position on the corresponding support plate device. Furthermore, the labeling machine generally comprises multiple labeling units mounted peripherally on the rotating turret, each of which is adapted to transfer labels onto a container held by a support plate and a container-pressing actuator.

The known support plate devices comprise a support disc, which extends along a substantially vertical centering axis between a support surface facing upwards and adapted to receive in abutment the bottom of a container, and an opposite lower surface. Furthermore, the plate devices comprise a centering ring fixed to the support surface of the support disc and extending around the centering axis. **In** more detail, the centering ring is provided with an internal edge substantially circular in shape, extending around the centering axis, which defines a central opening. The central opening generally has a diameter substantially equal to the diameter of the containers (in particular at the bottom) adapted to be placed in abutment on the support surface itself.

Operationally, when a container is placed on the support plate device, for example by means of a provided pocket wheel or a star wheel arranged to feed the operating machine, its bottom is placed inside the central opening of the centering ring in abutment on the support surface of the support disc. Thereby, the centering ring ensures that the container is always placed centrally with respect to the centering axis and, therefore, aligned with respect to the operating head placed above the plate device itself, thus ensuring a high machining precision.

**In** particular, the presence of the centering ring is particularly advantageous in the case of labeling machines. **In** fact, for this type of operating machine, the positioning and alignment of the container are of fundamental importance for the correct positioning of the label on the side surface of the container itself.

The support plate devices briefly described so far have proven to be not free from drawbacks in practice.

The main drawback lies in the fact that, as reported above, the diameter of the central opening of the centering ring is sized so as to be substantially equal to the diameter of the container to be processed. Consequently, this type of support plate device is arranged to operate with containers of a single format, a feature that significantly limits the operational flexibility of the operating machine in which such known support plates are used.

To at least partially solve such a problem, support plate devices provided with a replaceable centering ring have been introduced on the market. In more detail, in such known type of plate devices, the centering ring is removably fixed to the support surface of the support disc, in particular by quick-release fixing means, such as a snap-fit coupling.

The possibility of replacing the centering ring allows providing, for each support plate device installed on the operating machine, of a series of centering rings that differ from each other in the diameter of the central opening. Thereby, the replacement of the centering ring allows the plate device to support and center containers of different sizes, thus increasing the operational flexibility of the operating machine in which it is used. However, this type of support plate device with a replaceable centering ring has also proven to be not free from drawbacks in practice.

The main drawback is that the format change operations require a long machine downtime to replace all the centering rings of the plate devices used in the operating machine. Indeed, since generally operating machines of the rotating carousel type, such as labeling machines, are provided with a large number of support plate devices, despite the centering ring being fixed to the support disc by quick-release fixing means (e.g. snap-fit), the replacement of all the centering rings is performed manually by an operator and requires a considerable amount of time, thus reducing the production efficiency of the machine itself.

A further drawback lies in the fact that it is necessary to provide a specific centering ring for each container format to be placed on the known type of plate device. This means that, in the case in which the operating machine provided with the known type of support plate devices is used to process a large number of different containers, it is necessary to provide a high number of sets of centering rings (in particular each set composed of a number of centering rings at least equal to the number of support plates). Consequently, it is necessary to provide a portion of the bottling plant to be dedicated to the warehouse for the sets of centering rings, reducing the usable operating space of the plant itself.

A further drawback is that if the operating machine needs to be configured to operate with a new type of container different from those with which it normally operates, it is first necessary to produce a specific set of centering rings, which takes time and increases the operating costs of the operating machine, significantly reducing operational flexibility. Cup holders are known on the market for airplane seats which are provided with an iris-shaped diaphragm to hold containers of different sizes in place. For example, a device of this type is described in document EP 3663130. However, such cup holder devices are in no way compatible with use in an operating machine of a bottling plant.

### Presentation of the invention

**In** this situation, the problem underlying the present invention is to overcome the drawbacks manifested by the art known to date, by providing a support plate device and an operating machine provided with such a support plate device, which are able to operate with containers of different sizes.

A further object of the present invention is to provide a support plate device and an operating machine provided with such a support plate device, which ensure reduced machine downtime for changing the container format.

A further object of the present invention is to provide a support plate device and an operating machine provided with such a support plate device, which guarantee high productivity.

A further object of the present invention is to provide a support plate device and an operating machine provided with such a support plate device, which allow maintaining a high level of automation.

A further object of the present invention is to provide a support plate device and an operating machine provided with such a support plate device, which are structurally simple and operationally completely reliable.

### Brief description of the drawings

The technical features of the invention, according to the aforesaid objects, can be clearly seen from the contents of the claims set out below and the advantages thereof will become more evident in the detailed description which follows, made with reference to the attached drawings, which represent a purely exemplifying and non-limiting embodiment thereof, in which:
- Figure 1 shows a top perspective view of a plate device which is the subject of the present invention;
- Figure 2 shows a bottom perspective view of the plate device of Figure 1;
- Figure 3a shows a top view of the plate device of Figure 1 with a central opening of an iris-shaped diaphragm with minimum size;
- Figure 3b shows a top view of the plate device of Figure 1 with the central opening of the iris-shaped diaphragm at maximum size;
- Figure 4 shows a sectional side view of the plate device of Figure 1;
- Figure 5 shows a top sectional view of the plate device along the line VV of Figure 4;
- Figure 6 shows a top sectional view of the plate device along the line VI-VI of Figure 4;

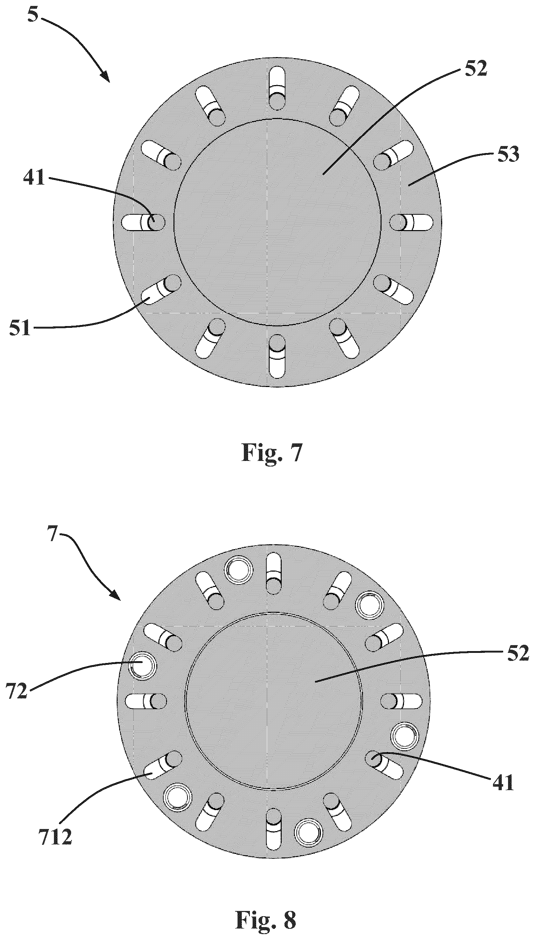

- Figure 7 shows a top sectional view of the plate device along the line VII-VII of Figure 4;
- Figure 8 shows a top sectional view of the plate device along the line VIII-VIII of Figure 4;
- Figures 9 and 10 show a perspective view from two different angles of a movable blade of the plate device of Figure 1;
- Figure 11 shows a perspective view of an operating machine provided with plate devices which are the subject of the present invention;
- Figure 12 shows a detail of the operating machine of Figure 11.

### Detailed description of a preferred embodiment example

With reference to the attached drawings, the reference numeral 1 indicates as a whole an exemplary embodiment of a support plate device which is the subject of the present invention.

The plate device 1 in question is adapted to be mechanically connected to an operating machine 100, in particular arranged in an industrial bottling plant, to support containers during the operations carried out thereon by the operating machine 100 itself. For example, as will be discussed in more detail below, if the plate device 1 which is the subject of the present invention is used in a labeling machine, it is arranged to support the containers during the application of the label on the latter.

In particular, the containers extend along a main extension axis between a lower end, at which they are provided with a bottom, and an opposite upper end, at which they are provided with an opening through which a liquid is susceptible of being introduced into or withdrawn from inside the container itself. For example, the containers are glass or PET bottles.

The plate device 1 which is the subject of the present invention is provided with a support surface 11 adapted to receive the bottom of the aforesaid containers in order to support them, advantageously with the main extension axis substantially vertical and with the upper end placed at a greater height than the lower end. In other words, the plate device 1 supports the containers arranged vertically with the opening facing upwards. According to the idea underlying the present invention, the plate device 1 comprises an iris-shaped diaphragm 2, which is arranged above the support surface 11 and comprises a plurality of movable blades 3, which are provided with at least one sliding edge 31 and at least one centering edge 32. The centering edge 32 of each movable blade 3 defines, together with the centering edges 32 of the other said movable blades 3, an annular internal centering surface 21, which extends around a centering axis X, advantageously substantially vertical, and delimits a central opening 22 of the iris-shaped diaphragm 2. Advantageously, a movement of the movable blades 3 causes a variation in the mutual position of the centering edges 32 which leads to a consequent variation of the internal centering surface 21 and, therefore, a variation in the size of the central opening 22. The size of the central opening 22 should be understood as the minimum width of the latter, in particular measured diametrically with respect to the centering axis X.

The internal centering surface 21 defines, together with the support surface 11, a centering seat 23 within which the lower end of the container is susceptible of being placed with the bottom in abutment on the support surface 11.

In use, the central opening 22 advantageously has a size substantially equal to the diameter of the container (in particular at the lower end thereof) intended to be placed in abutment on the support surface 11, so as to allow the lower end of the container itself to be inserted substantially to size in the centering seat 23. Thereby, when the plate device 1 receives in abutment a container on the support surface 11, the insertion of the latter into the centering seat 23 causes an alignment of the main extension axis of the container itself with the centering axis X of the plate device 1 which is the subject of the present invention. In other words, the iris-shaped diaphragm 2, and in particular its central opening 22, has the function of an adjustable centering element to align the containers vertically with respect to the centering axis X.

"Substantially to size" is meant to intend that the lower end of the container supported by the plate device 1 is arranged within the centering seat 23 with a reduced clearance with respect to the internal centering surface 21, so that the container does not move, remaining aligned with its own main extension axis with respect to the centering axis X of the plate device 1 itself.

As will be discussed in more detail below, centering the container with respect to the centering axis X of the plate device 1 of the present invention allows the operating machine 100 on which the plate device 1 is installed to operate on the container precisely and efficiently.

Each movable blade 3 is actuatable to be moved with its own sliding edge 31 slidably associated with the centering edge 32 of the contiguous movable blade 3 in order to adjust the dimensions of the central opening 22 in order to house, in the aforesaid centering seat 23, containers with size different from each other.

Thereby, the variation of the position of the movable blades 3 and the consequent variation of the size of the central opening 22 allows the use of the plate device 1 which is the subject of the present invention with containers of various sizes. In fact, if the plate device 1 (and advantageously the operating machine 100 on which it is mounted) needs to be reconfigured to receive in abutment containers of a different size (by carrying out an operation which in technical jargon is known as "format change"), it is sufficient to actuate the movable blades 3 to move so as to adjust the size of the central opening 22 of the iris-shaped diaphragm 3 to allow the centering seat 23 to receive substantially to size the lower end of the containers of a different size. In particular, the possibility of adapting the plate device 1 to receive containers of different sizes by operating the movable blades 3 to move but without having to replace any component of the plate device 1 allows for a significant reduction in the machine downtime required to perform the "format change", consequently increasing the operational flexibility of both the plate device 1 and the operating machine 100 on which it is adapted to be mounted.

"Format" of a container is intended as both the geometric shape and the dimensions, and in particular the diameter of the container with respect to its main extension axis corresponding to the lower end of the container itself.

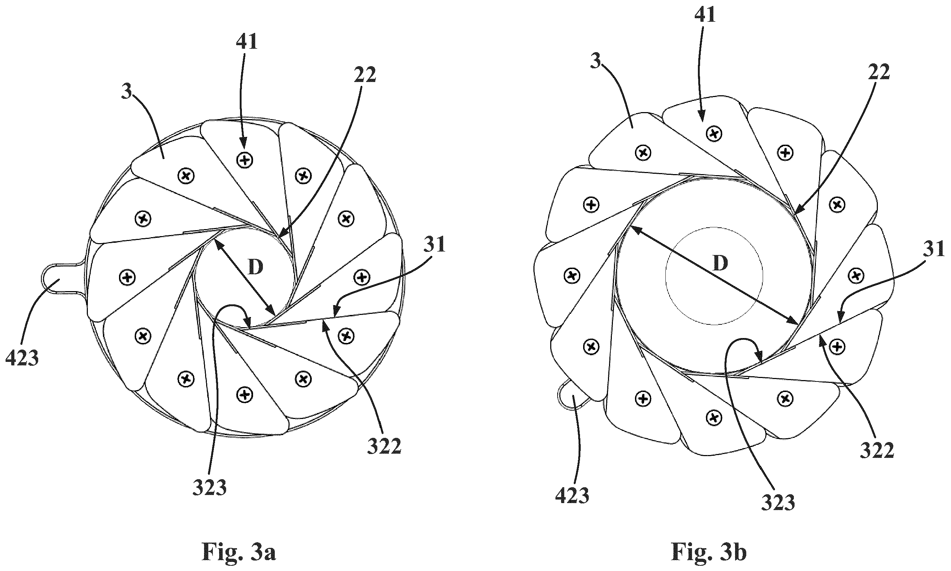

Advantageously, the size of the centering opening 22 is adjustable between a minimum value (represented in Figure 3a), preferably non-zero, and a maximum value (represented in Figure 3b). Thereby, the plate device 1 which is the subject of the present invention is adjustable to receive in the centering seat 23 containers with a diameter (in particular at their lower end) between the minimum value and the maximum value of the size of the centering opening 22 of the iris-shaped diaphragm 2.

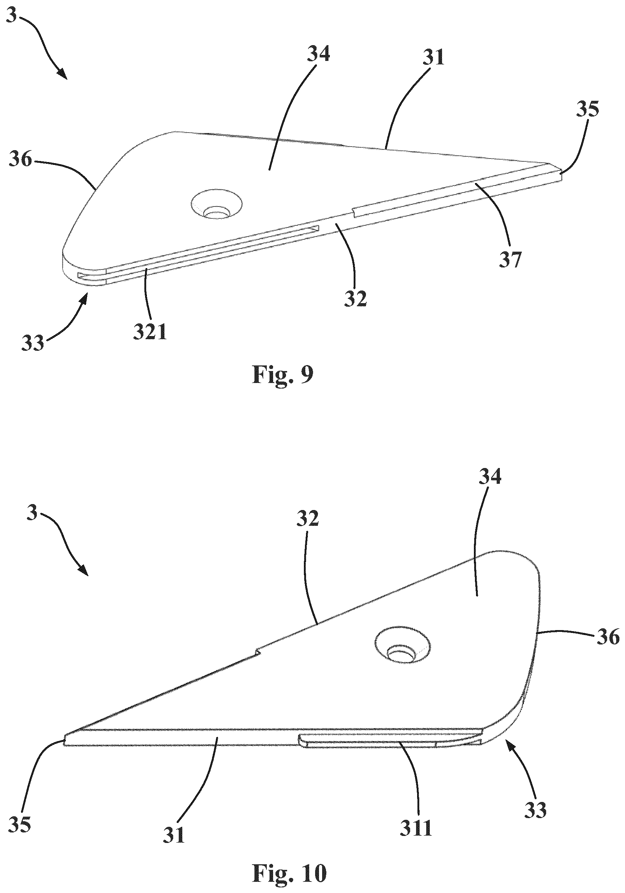

Advantageously, with reference to Figures 9 and 10, each movable blade 3 has a substantially plate-like shape and extends, along the centering axis X, between a sliding face 33 arranged in abutment on the support surface 11 and an opposite free face 34. Preferably, at least the centering edge 32 and the sliding edge 31 are arranged to connect the sliding face 33 and the free face 34.

Advantageously, the sliding edge 31 and the centering edge 32 of each movable blade 3 are consecutive to each other and extend starting from a common vertex 35.

With reference to Figures 9 and 10, the movable blade 3 has a triangular shape, and is provided with a connecting edge 36 placed as a connection between the centering edge 32 and the sliding edge 31.

Advantageously, each movable blade 3 comprises a lead-in surface 37 which is inclined with respect to the centering axis X, which is placed as a connection between the centering edge 32 and the free face 34 and extends starting from the common vertex 35. Thereby, the lead-in surface 37 facilitates the insertion of the lower end of the container into the centering seat 23.

Advantageously, with reference to Figures 9 and 10, the centering edge 32 of each said movable blade 3 comprises a coupling groove 321 and the sliding edge 31 of each said movable blade 3 comprises a coupling appendage 311 slidably inserted in the coupling groove 321 of the contiguous movable blade 3 in order to guide the mutual sliding of the centering edge 32 with respect to the sliding edge 31.

In accordance with the embodiment depicted in the attached figures, the centering surface 21 has a regular polygonal shape, and is circumscribed by a circumference provided with an opening diameter D. In particular, the movement of the movable blades 3 causes a variation in the opening diameter D of the centering surface 21. Preferably, the position of the movable blades 3 is adjusted so that the opening diameter D of the circumference inscribed in the internal centering surface 21 is substantially equal to the diameter of the container (in particular at its lower end) adapted to be placed in abutment on the plate device 1.

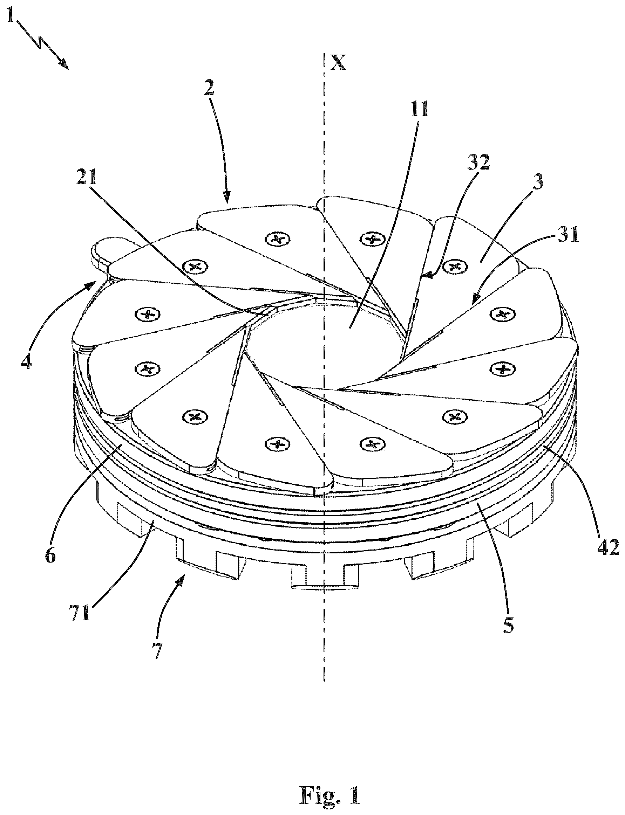

Advantageously, with reference to Figures 3a and 3b, the centering edge 32 of each movable blade 3 is provided with an engagement section 322, which is engaged by the sliding edge 31 of the contiguous movable blade 3, and a free section 323, which is disengaged from the sliding edge 31 of the contiguous movable blade 3. Preferably, the engagement section 322 and the free section 323 of the centering edge 32 have a variable length depending on the position of the movable blades 3. Advantageously, the internal centering surface 21 is defined by the free section 323 of each movable blade 3. Preferably, the iris-shaped diaphragm 2 comprises at least three movable blades 3. With reference to Figure 1, the iris-shaped diaphragm 2 advantageously comprises twelve movable blades 3. Without departing from the scope of the present invention, the iris-shaped diaphragm 2 can comprise any number of movable blades 3.

Advantageously, the plate device 1 comprises adjustment means 4, which are mechanically connected to the movable blades 3 and can be actuated to move them to adjust the size of the central opening 22.

Thereby, with the plate device 1 which is the subject of the present invention it is possible to actively vary the size of the central opening 22 so as to allow the insertion of containers of different sizes into the centering seat 23. In particular, if it becomes necessary to reconfigure the plate device 1 to support and center containers with a different format, and in particular with a different diameter at the lower end, the adjustment means 4 are actuated to move the movable blades 3 to adjust the size of the central opening 22 to adapt the centering seat 23 to receive, substantially to size, the lower end of the containers with a different format size.

Advantageously, each movable blade 3 of the iris-shaped diaphragm 2 is actuated by the adjustment means 4 to be moved according to a rotational-translation motion, preferably with at least one rotary component around a corresponding rotation axis R substantially parallel to the centering axis X and at least one radial component with respect to the centering axis X itself.

Advantageously, the plate device 1 comprises a base body 5, on which a plurality of first guide slots 51 are attained, each of which extended radially with respect to the centering axis X.

Preferably, the base body 5 comprises a first base portion 52, which extends along the centering axis X between a first end facing the support surface 11 and an opposite second end. Advantageously, the first base portion 52 extends with a substantially cylindrical shape around the centering axis X.

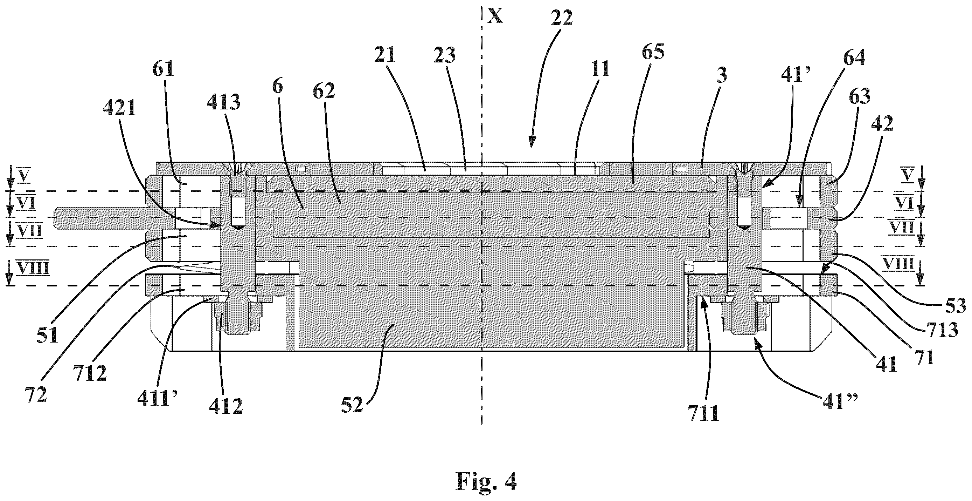

In accordance with Figure 4, the base body 5 advantageously comprises a first flange 53, which extends projecting from the base body 52 radially with respect to the centering axis X preferably at the first end. Preferably, the first guide slots 51 are attained on the first flange 53 of the base body 5, advantageously in a through manner.

Advantageously, the adjustment means 4 comprise several movement pins 41, each of which extends along an extension axis Z between a first end portion 41', at which a corresponding movable blade 3 is fixed, and an opposite second end portion 41".

Advantageously, in accordance with the embodiment depicted in the attached figures, each movable blade 3 is fixed to the corresponding movement pin by means of a screw 413.

Preferably, each movement pin 41 is slidably inserted into a corresponding first guide slot 51 of the base body 5.

Advantageously, each movement pin 41 slides in the corresponding first guide slot 51 radially with respect to the centering axis X and rotates around its own extension axis Z, and preferably acts as a rotation pin of the corresponding movable blade 3 around the corresponding rotation axis R which coincides with the extension axis Z of the movement pin 41 itself. Thereby, the movement pin 41 allows the rotational-translation motion of each movable blade 3.

Preferably, each movement pin 41 is movable at least along the corresponding first guide slot 51 between a first end position and a second end position in which it is farther from the centering axis X with respect to when it is in the first end position. Advantageously, when the movement pins 41 are in the first end position, the size of the centering opening 22 assumes the minimum value (represented in Figure 3a), and when the movement pins 41 are in the second end position the size of the centering opening 22 assumes the maximum value (represented in Figure 3b).

Advantageously, each first guide slot 51 extends radially with respect to the centering axis X with a width substantially equal to the diameter of the movement pins 41. Thereby, the movement pins 41 can only move along a radial direction with respect to the centering axis X.

With reference to Figure 4, the adjustment means 4 advantageously comprise a control body 42, which is rotatably connected to the base body 5 around the centering axis X.

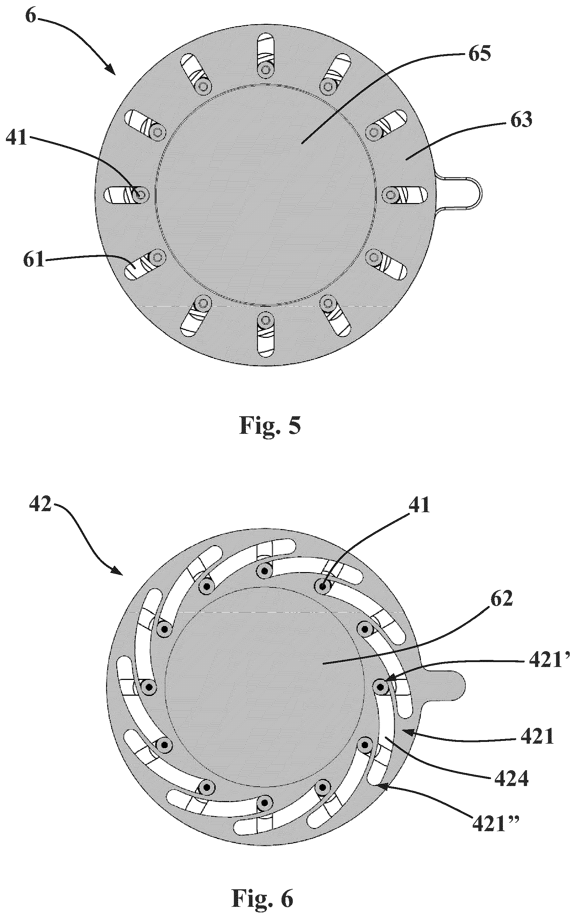

Advantageously, with reference to Figure 6, the control body 42 is provided with multiple cam profiles 421, each of which extends with the shape of spiral sections around the centering axis X between a first end 421' and a second end 421" arranged at a greater distance from the centering axis X than the first end 421'. Preferably, each movement pin 41 is slidably associated with a corresponding cam profile 421.

Thereby, a rotation of the control body 42 around the centering axis X causes a rotation of the cam profiles 421 which, due to the spiral shape thereof, causes a corresponding movement of each movement pin 41 along at least the first guide slot 51 in which it is slidably inserted towards or away from the centering axis X. In other words, the rotation of the control body 42 around the centering axis X induces the radial component of the rotational-translation motion of the movable blades 3. Furthermore, the sliding coupling between the centering edge 32 and the sliding edge 31 of adjacent movable blades 3 induces, as a function of the movement of the movement pins 41 radially at least along the first guide slots 51, the rotation of the movable blades 3 themselves around their own rotation axis R and, therefore, the rotating component of the rotational-translation motion of the movable blades 3 themselves.

Preferably, with reference to Figure 6, a plurality of guide grooves 424 are attained on the control body 42, preferably through, each of which defines a corresponding cam profile 421.

Advantageously, the plate device 1 comprises a support body 6, which is mechanically connected to the base body 5 and defines the support surface 11.

Preferably, in accordance with Figure 5, on the support body 6 a plurality of second guide slots 61 are attained, each of which extended radially with respect to the centering axis X, is aligned with a corresponding first guide slot 51 of the base body 5 and carries, slidably inserted therein, a corresponding movement pin 41.

Thereby, the second guide slots 61 cooperate with the first guide slots 51 to guide the radial movement of the movement pins 41, increasing the precision of the movement itself and, therefore, the reliability of the adjustment of the iris-shaped diaphragm 2 and the plate device 1.

Advantageously, each second guide slot 61 extends radially with respect to the centering axis X with a width substantially equal to the diameter of the movement pins 41. Thereby, the movement pins 41 can only move along a radial direction with respect to the centering axis X.

Preferably, the support body 6 comprises a second base portion 62, which extends along the centering axis X between a third end arranged in abutment on the first end of the base body 5, and an opposite fourth end. Advantageously, the second base portion 62 extends with a substantially cylindrical shape around the centering axis X.

Advantageously, the support body 6 comprises a support element 65, which is arranged at the fourth end, defines, at least partially, the support surface 11, and is adapted to receive in abutment the bottom of the container to be supported and centered. Preferably, the support element 65 is made of rubber, so as to reduce the possibility of the bottom of the container slipping on the support elements 65.

Advantageously, the control body 6 is mechanically fixed to the base body 5 by fixing means (not depicted in the attached figures), for example screw fixing means. According to an embodiment variant not depicted in the attached figures, the control body 6 and the base body 5 are attained in a single body.

In accordance with Figure 4, the support body 6 advantageously comprises a second annular flange 63, which extends projecting from the second base portion 62 radially with respect to the centering axis X preferably at the third end. Preferably, the second guide slots 61 are attained on the second flange 63 of the control body 6, advantageously in a through manner.

Advantageously, the first flange 53 of the base body 5 and the second flange 63 of the support body 6 extend parallel and spaced apart from each other, and define a housing seat 64 therebetween.

Advantageously, with reference to Figure 4, the control body 42 extends around the centering axis X with a substantially annular shape and is preferably arranged at least partially around the second base portion 62 of the support body 6.

In accordance with the embodiment depicted in the attached figures, the control body 42 is advantageously arranged within the housing seat 64 defined by the first flange 53 of the base body 5 and by the second flange 63 of the support body 6. Thereby, the second base portion 62 of the support body 6 acts as a rotation pin for the rotation of the control body 42 around the centering axis X, and the first 53 and second flange 63 prevent the control body X from sliding along the centering axis X.

Advantageously, the control body 42 comprises an actuation portion 423 extending in a projecting manner away from the centering axis X and usable to actuate the control body 42 in rotation around the centering axis X. Preferably, the actuation can be of the manual type, in particular with an operator who grips the actuation portion 423 and manually sets the control body 42 in rotation, or it can be of the automatic type, in particular with movement means (not depicted in the attached figures) mechanically connected to the actuation portion 423 to set the control body 42 in rotation.

Advantageously, the plate device 1 which is the subject of the present invention comprises blocking means 7, mechanically connected to the movable blades 3 and arranged for taking on a blocking configuration, in which they prevent the movement of the movable blades 3 and a release configuration, in which they allow the movement of the movable blades 3 in order to adjust the size of the central opening 22.

Operationally, when the plate device 1 supports containers of the same format, the blocking means 7 assume the blocking configuration, so that the central opening 22 of the iris-shaped diaphragm 2 does not vary. When it is instead necessary to carry out the format change operation to reconfigure the plate device 1 to support containers with a different format, the locking means 7 are switched to the release configuration to allow the adjustment of the size of the central opening 22 to adapt the centering seat 23 to receive substantially to size the lower end of the containers with a different format. Advantageously, the blocking means 7 comprise a stop body 71 slidably connected to the base body 5 along the centering axis X between a first position, in which the blocking means 7 take on the blocking configuration, and a second position, in which the blocking means 7 take on the release configuration.

Preferably, the stop body 71 extends with an annular shape at least partially around the first base portion 52 of the base body 5. Thereby, the first base portion 52 of the base body 5 acts as a guide for the movement of the stop body 7 along the centering axis X at least between the first and second positions.

Advantageously, the stop body 71 is provided with an abutment surface 711 facing the opposite direction with respect to the support surface 11, and an opposite upper surface 713.

Preferably, with reference to Figure 4, the upper surface 713 of the stop body 71 faces the base body 5, and in particular the first flange 53 of the base body 5. Advantageously, when the stop body 71 is in the first position, the upper surface 713 is at a greater distance (in particular measured parallel to the centering axis X) from the first flange 53 of the base body 5 with respect to when it is in the second position. In other words, when the stop body 71 is moved from the first position to the second position, the upper surface 713 approaches the first flange 53, while when the stop body 71 is moved from the second position to the first position, the upper surface 713 moves away from the first flange 53. Advantageously, each movement pin 41 has a fixed abutment element 411, preferably at its second end portion 41". In accordance with the embodiment depicted in the attached figures, the abutment element 411 is preferably a washer 411', inserted into the movement pin 41, and advantageously held in position by means of a nut 411" screwed onto the second end portion 41" of the movement pin 41.

Preferably, when the stop body 71 is arranged in the first position, the abutment element 411 of each movement pin 41 is arranged in abutment against the abutment surface 711 of the stop body 71 to prevent the movable blades 3 from moving due to friction.

In this situation, the force exerted by the stop body 71 (in particular via the abutment surface 711) on the abutment element 411 is transferred, in particular via the movement pin 41, to the movable blade 3 which is held in abutment by the support surface 11, thereby preventing the sliding of the sliding face 33 itself on the support surface 11 by friction and, therefore, preventing the movement of the movable blade 3. Advantageously, when the stop body 71 is in the second position, the abutment element 411 of each movement pin 41 is arranged spaced from the abutment surface 711 allowing the movable blades 3 to be moved to adjust the size of the central opening 22 of the iris-shaped diaphragm 2.

In this situation, no force is exerted on the abutment element 711 and, therefore, the sliding face 33 of the movable blade 3 is free to slide on the support surface 11, thereby allowing the movement of each movable blade 3 and, therefore, the adjustment of the size of the central opening 22 of the iris-shaped diaphragm 2.

Preferably, the blocking means 7 comprise at least one elastic element 72 mechanically connected to the base body 5 and to the stop body 71 and configured to exert an elastic force on the stop body 71 to push it towards the first position. Thereby, in the absence of external forces acting on the plate device 1, the stop body 71 is held in the first position by the action of the elastic element 72, preventing an undesired movement of the movable blades 3 and the consequent undesired variation in the size of the central opening 22 of the iris-shaped diaphragm 2.

Advantageously, the blocking means 7 comprise a plurality of elastic elements 72, arranged circumferentially around the centering axis X.

Preferably, in accordance with the embodiment depicted in the attached figures, the elastic element 72 is a helical spring. Without departing from the scope of protection of the present invention, the elastic element 72 can be any mechanical element capable of exerting a force on the stop body 7 to push it towards the first position. Advantageously, a plurality of third guide slots 712 are attained on the stop body 71, preferably in a through manner, each of which extends radially with respect to the centering axis X, is aligned with a corresponding first guide slot 51 of the base body 5 and has a corresponding movement pin 41 slidably inserted therein.

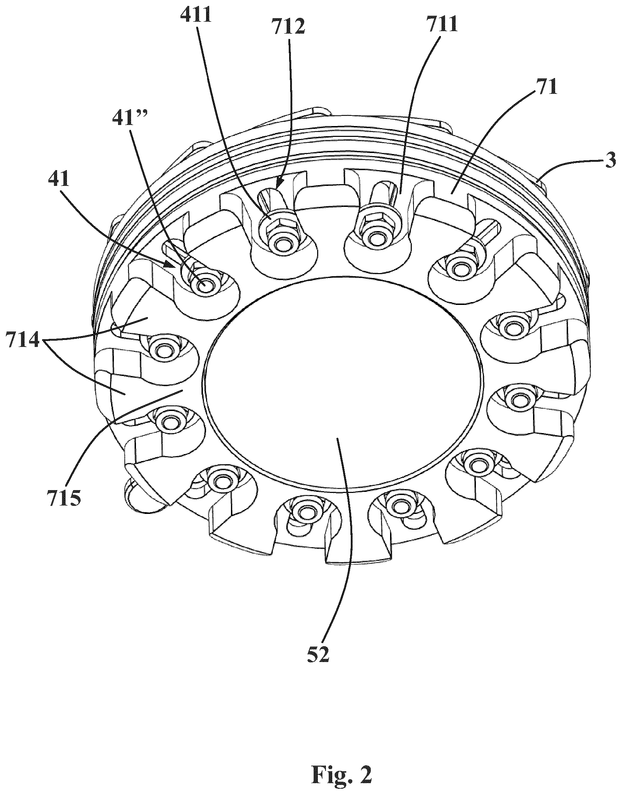

Thereby, the coupling between the third guide slots 712 and the movement pins 41, which are slidably inserted at least into the first guide slots 51 of the base body 5, allows avoiding an undesired rotation of the stop body 71 with respect to the base body 5. Advantageously, with reference to Figure 2, the stop body 71 comprises a plurality of projecting portions 714, each of which extends projecting from the abutment surface 711 and is interposed between two adjacent third guide slots 712. Preferably, each projecting portion 714 extends for a height (preferably measured parallel to the centering axis X) from the abutment surface 711 greater than or equal to the projecting of each movement pin 41 from the abutment surface 711 itself. Thereby, the projecting portions 714 can be fixed, for example, to the support structure 101 of the operating machine 100 without the support structure 101 itself impeding the movement of the movement pins 41. Preferably, the projecting portions 714 are connected to each other by means of a connecting portion 715 which advantageously extends around the centering axis X.

The present invention further relates to an operating machine 100 for a bottling plant.

Advantageously, the operating machine 100 comprises a support structure 101, preferably intended to be placed on the ground, and a plurality of operating heads 102, each of which is mechanically connected to the support structure 101 and is adapted to process a container.

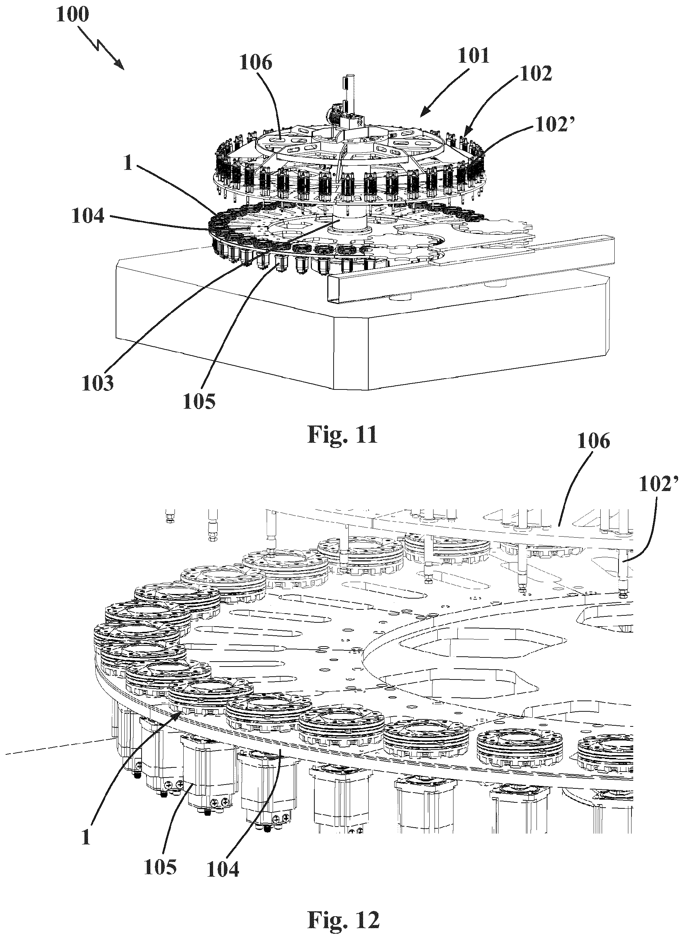

With reference to Figure 11, the support structure 101 of the operating machine 100 advantageously comprises a rotating carousel 103, which is actuated to rotate around a substantially vertical actuation axis.

Without departing from the scope of protection of the present invention, the operating machine 100 can be a linear type machine and, therefore, not provided with the rotating carousel 103.

Advantageously, the operating machine 100 comprises a plurality of support plate devices 1 of the type described above, of which the same numerical references will be maintained for greater clarity of explanation.

Preferably, each plate device 1 is mechanically connected to the support structure 101 below to a corresponding operating head 102 and is adapted to support the container to be processed.

Thereby, the plate device 1 allows, by means of the iris-shaped diaphragm 2 described above, centering the container with respect to the operating head 102, thus favoring more precise processing of the latter.

In this context, "processing" the container should be understood as any operation performed on the container itself by the operating head 102. For example, with reference to Figure 11, in the case of a labeling machine, each operating head 102 comprises a compression device 102', which is adapted to exert a compression force on the upper end of the container arranged in abutment on the support plate device 1.

Advantageously, the support structure 101 comprises a first support disc 104, preferably fixed to the rotating carousel 103, on which a plurality of plate devices 1 are mounted, in particular arranged circumferentially with respect to the actuation axis of the rotating carousel 103 itself. Preferably, the plate devices 1 are arranged with at least the projecting portions 714 of the stop body 71 arranged in abutment on the first support disc 104, and are advantageously fixed to the latter by screw fixing means (not depicted in the attached figures).

Operationally, when it is necessary to perform the "format change" operation of the operating machine 100 to reconfigure it to operate with containers of different format, the iris-shaped diaphragm 2 of each plate device 1 is actuated to adjust the size of the central opening 22 so as to allow the lower end of the containers of different format to be inserted substantially to size in the centering seat 23. In particular, the "format change" occurs without the need to replace components of the plate devices 1, thus reducing the machine downtime required to perform the "format change" and, therefore, increasing the operational flexibility and efficiency of the operating machine 100.

Advantageously, with reference to Figure 12, the operating machine 100 comprises a plurality of electric motors 105, each of which is mechanically connected to a corresponding plate device 1 and is adapted to actuate it in rotation around the centering axis X.

Preferably, the support structure 101 comprises a second support disc 106, preferably fixed to the rotating carousel 103, arranged above the first support disc 104 and carrying mounted the aforesaid operating heads 102.

Therefore, the invention thus conceived achieves the pre-set objects.

## Claims

1. Support plate device adapted to be mechanically fixed to an operating machine (100) of a bottling plant in order to support containers, said plate device (1) is provided with a support surface (11) adapted to receive, in abutment, the bottom of said containers; said support plate device being **characterized in that** it comprises an iris-shaped diaphragm (2), which is placed above said support surface (11) and comprises a plurality of movable blades (3) which are provided with at least one sliding edge (31) and with at least one centering edge (32) defining, together with the centering edges (32) of the other said movable blades (3), an annular internal centering surface (21) extended around a centering axis (X) and delimiting a central opening (22) of said iris-shaped diaphragm (2); in which said internal centering surface (21) defines, with said support surface (11), a centering seat (23) within which the lower end of said container is susceptible of being placed with the bottom in abutment against said support surface (11);
and **in that** each said movable blade (3) is actuatable to be moved with its own said sliding edge (31) slidably associated with said centering edge (32) of said contiguous movable blade (3) in order to adjust the dimensions of said central opening (22) in order to house, in said centering seat (23), containers with size different from each other.

2. Plate device according to claim 1, **characterized in that** it comprises adjustment means (4), mechanically connected to said movable blades (3) and actuatable to move them in order to adjust the dimensions of said central opening (22);
in which each movable blade (3) of said iris-shaped diaphragm (2) is actuated by said adjustment means (4) to be moved according to a rotational-translation motion with at least one rotary component around a corresponding rotation axis (R) substantially parallel to said centering axis (X) and at least one radial component with respect to said centering axis (X).

3. Plate device according to claim 2, **characterized in that** it comprises a base body (5) on which a plurality of first guide slots (51) are attained, each of which extended radially with respect to said centering axis (X);
and **in that** said adjustment means (4) comprise:
- multiple movement pins (41), each of which extended along an extension axis (Z) between a first end portion (41'), at which one corresponding said movable blade (3) is fixed, and an opposite second end portion (41''); in which each said movement pin (41) is slidably inserted in a corresponding first guide slot (51) of said base body (5);
- a control body (42), which is rotatably connected to said base body (5) around said centering axis (X) and is provided with multiple cam profiles (421), each of which extended with spiral section form around said centering axis (X) between a first end (421') and a second end (421") placed at a distance from said centering axis (X) greater than said first end (421'); in which each said movement pin (41) is slidably associated with a corresponding said cam profile (421).

4. Plate device according to claim 3, **characterized in that** it comprises a support body (6), which is mechanically connected to said base body (5) and defines said support surface (11), and on which a plurality of second guide slots (61) are attained, each of which radially extended with respect to said centering axis (X), aligned with a corresponding first guide slot (51) of said base body (5) and carries, slidably inserted therein, a corresponding movement pin (41).

5. Plate device according to any one of the preceding claims, **characterized in that** it comprises blocking means (7), mechanically connected to said movable blades (3) and arranged for taking on a blocking configuration, in which they prevent the movement of said movable blades (3) and a release configuration, in which they allow the movement of said movable blades (3) in order to adjust the size of said central opening (22).

6. Plate device according to claim 3 or 4 and according to claim 5, **characterized in that** said blocking means (7) comprise a stop body (71) slidably connected to said base body (5) along said centering axis (X) between a first position, in which said blocking means (7) take on said blocking configuration, and a second position, in which said blocking means (7) take on said release configuration;
in which said stop body (71) is provided with an abutment surface (711) directed in a direction opposite said support surface (11) and in which each said movement pin (41) carries, fixed thereto, an abutment element (411), which:
- with said stop body (71) placed in said first position, is placed in abutment against the abutment surface (711) of said stop body (71) in order to prevent the movement of said movable blades (3) via friction, and
- with said stop body (71) in said second position is placed spaced from said abutment surface (711), allowing the movement of said movable blades (3) in order to adjust the size of said central opening (22).

7. Plate device according to claim 6, **characterized in that** on said stop body (71), a plurality of third guide slots (712) are attained, each of which extended radially with respect to said centering axis (X), is aligned with a corresponding first guide slot (51) of said base body (5) and carries, slidably inserted therein, a corresponding said movement pin (41).

8. Plate device according to claim 6 or 7, **characterized in that** said blocking means (7) comprise at least one elastic element (72) mechanically connected to said base body (5) and to said stop body (71) and configured in order to exert an elastic force on said stop body (71) in order to push it towards said first position.

9. Plate device according to any one of the preceding claims, **characterized in that** the centering edge (32) of each said movable blade (3) comprises a coupling groove (321) and the sliding edge (31) of each said movable blade (3) comprises a coupling appendage (311) slidably inserted in said coupling groove (321) of said contiguous movable blade (3) in order to guide the mutual sliding of said centering edge (32) with respect to said sliding edge (31).

10. Operating machine (100) for a bottling plant comprising:
- a support structure (101);
- a plurality of operating heads (102), each of which mechanically connected to said support structure (101) and is adapted to process one said container;
- a plurality of support plate devices (1) according to any one of the preceding claims, each of which mechanically connected to said support structure (101) below a corresponding said operating head (102) and adapted to receive, in abutment, said container to be processed.
